# EUROPEAN PATENT APPLICATION

(11) **EP 3 951 454 A1**
(43) Date of publication of application: **09.02.2022**
(21) Application number: 20783508.3
(22) Date of filing: 26.03.2020
(51) Int. Cl.: G02B 5/30, B32B 7/023, G02F 1/1335

(54) **OPTICAL FILM**

(30) Priority: 29.03.2019 JP 2019065489
(71) Applicant: Nitto Denko Corporation, Ibaraki-shi, Osaka 567-8680 (JP)
(72) Inventor: MURASHIGE Takeshi, Ibaraki-shi, Osaka 567-8680 (JP); INAGAKI Junichi, Ibaraki-shi, Osaka 567-8680 (JP); SATO Keisuke, Ibaraki-shi, Osaka 567-8680 (JP); KISHI Atsushi, Ibaraki-shi, Osaka 567-8680 (JP)
(74) Representative: Hoffmann Eitle
(86) International application number: PCT/JP2020/013666
(87) International publication number: WO 2020/203647

(57) **Abstract**

Provided is an optical film, which, despite including a polarizing plate having a recessed portion or a through-hole, is excellent in handleability, is suppressed from causing the strain of the polarizing plate, and shows a small dimensional change owing to an environmental change. The optical film of the present invention includes a glass film, a polarizing plate, and a pressure-sensitive adhesive layer in the stated order, wherein the polarizing plate has a recessed portion that opens on a surface of the polarizing plate opposite to the glass film, or a through-hole, wherein part of the pressure-sensitive adhesive layer fills the recessed portion or the through-hole, and wherein the glass film has a thickness of from 30 µm to 150 µm.

## Description

### Technical Field

The present invention relates to an optical film.

### Background Art

Some of image display apparatus, such as a laptop personal computer (PC) and a mobile device, are each mounted with a camera. In any such image display apparatus, a configuration in which its outermost surface layer has no step has been required from the viewpoint of a design property, and hence a polarizing plate may be arranged on a viewer side with respect to the built-in camera. In such case, there is a problem in that the polarizing plate absorbs light to preclude a sufficient quantity of the light from reaching the camera. To solve the problem, an investigation has been made on a technology including removing part of the polarizing plate in its thickness direction at a position corresponding to the camera and filling a recessed portion (removed portion) thus produced with an optical pressure-sensitive adhesive (e.g., Patent Literature 1). However, as a result of the formation of the removed portion, there occurs a problem in terms of process, such as the tearing of the polarizing plate at the time of its handling due to a reduction in rigidity of the polarizing plate. In addition, after the mounting of the polarizing plate, there occurs a problem in that a local deformation thereof occurs under an environment where a temperature change is present, and hence the quality of imaging reduces.

### Citation List

### Patent Literature

[PTL 1] US 9075199 B2

### Summary of Invention

### Technical Problem

The present invention has been made to solve the problems, and a primary object of the present invention is to provide an optical film, which, despite including a polarizing plate having a recessed portion or a through-hole, is excellent in handleability, is suppressed from causing the strain of the polarizing plate, and shows a small dimensional change owing to an environmental change.

### Solution to Problem

According to one embodiment of the present invention, there is provided an optical film, including a glass film, a polarizing plate, and a pressure-sensitive adhesive layer in the stated order, wherein the polarizing plate has a recessed portion that opens on a surface of the polarizing plate opposite to the glass film, or a through-hole, wherein part of the pressure-sensitive adhesive layer fills the recessed portion or the through-hole, and wherein the glass film has a thickness of from 30 µm to 150 µm.

In one embodiment, the optical film further includes an adhesive layer arranged between the glass film and the polarizing plate.

In one embodiment, the adhesive layer has a thickness of 10 µm or less.

In one embodiment, the polarizing plate includes a polarizer, and the recessed portion or the through-hole has a plan-view area of from 0.3×10⁻⁶ m² to 20×10⁻⁴ m² on a surface on a glass film side of the polarizer.

### Advantageous Effects of Invention

According to the present invention, the optical film, which, despite including a polarizing plate having a recessed portion or a through-hole, is excellent in handleability, and shows a small dimensional change owing to an environmental change, can be provided.

### Brief Description of Drawings

FIG. **1(a)** is a schematic plan view of an optical film according to one embodiment of the present invention, and FIG. **1(b)** is a sectional view of the optical film taken along the line i-i of FIG. **1(a)****.**
FIG. **2 (a)** is a schematic plan view of an optical film according to another embodiment of the present invention, and FIG. **2(b)** is a sectional view of the optical film taken along the line ii-ii of FIG. **2(a)**.

### Description of Embodiments

Now, embodiments of the present invention are described. However, the present invention is not limited to these embodiments.

### A. Outline of Optical Film

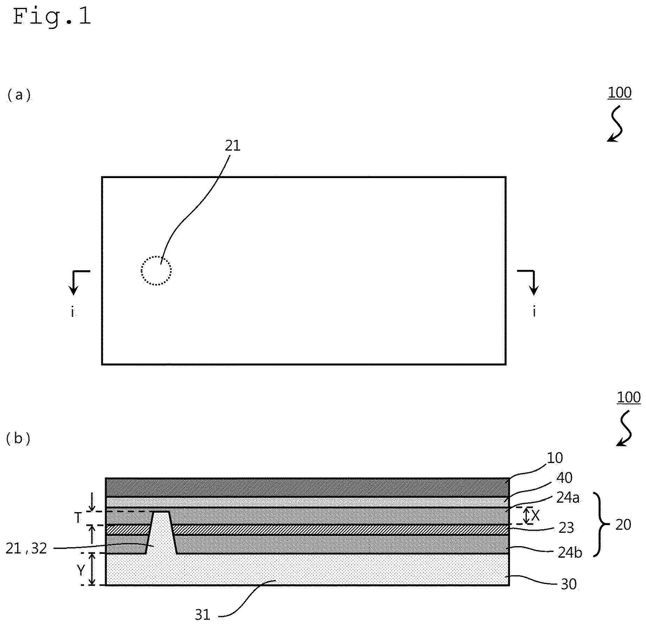

FIG. **1(a)** is a schematic plan view of an optical film according to one embodiment of the present invention, and FIG. **1(b)** is a sectional view of the optical film taken along the line i-i of FIG. **1(a)****.** An optical film 100 includes a glass film 10, a polarizing plate **20**, and a pressure-sensitive adhesive layer **30** in the stated order. The polarizing plate **20** has a recessed portion **21** that opens on a surface opposite to the glass film **10** (lower surface of the polarizing plate). Part of the pressure-sensitive adhesive layer **30** fills the recessed portion **21**. More specifically, the pressure-sensitive adhesive layer **30** fills the recessed portion **21** while being formed so as to be capable of bonding the optical film **100** to any appropriate adherend (e.g., a liquid crystal cell) .

Herein, for convenience, the glass film side of the optical film is defined as an upper side, and the pressure-sensitive adhesive layer side thereof is defined as a lower side. In addition, in one embodiment, when the optical film is applied to an image display apparatus, the upper side of the optical film may correspond to the viewer side of the image display apparatus.

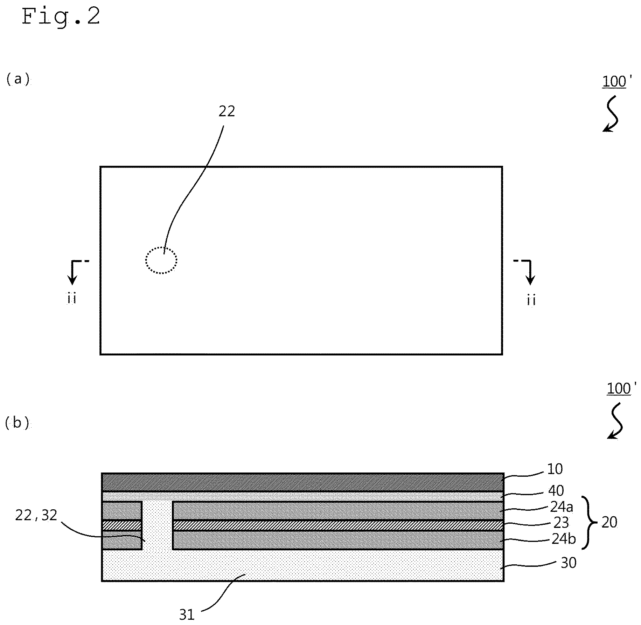

FIG. **2(a)** is a schematic plan view of an optical film according to one embodiment of the present invention, and FIG. **2(b)** is a sectional view of the optical film taken along the line ii-ii of FIG. **2(a)**. An optical film **100**' includes a glass film **10**, a polarizing plate **20**, and a pressure-sensitive adhesive layer **30** in the stated order. The polarizing plate **20** includes the glass film **10** having a thorough-hole **22**. Part of the pressure-sensitive adhesive layer **30** fills the thorough-hole **22**. More specifically, the pressure-sensitive adhesive layer **30** fills the thorough-hole **22** while being formed so as to be capable of bonding the optical film **100'** to any appropriate adherend (e.g., a liquid crystal cell) .

The optical film of the present invention is suitably used in an image display apparatus with a camera. In addition, the optical film of the present invention can function as the viewer-side polarizing plate of an image display apparatus, and may be arranged on the viewer side of a predetermined member (e.g., a liquid crystal cell) so that the glass film may be on the viewer side. In the image display apparatus with a camera, the optical film is arranged while the position of the camera and the position of the recessed portion or the through-hole are caused to correspond to each other. In one embodiment, the optical film of the present invention may be used in an image display apparatus including a touch sensor. The image display apparatus may include a liquid crystal cell including a substrate having incorporated thereinto the touch sensor. In the optical film of the present invention, the recessed portion or the through-hole is formed in the polarizing plate, and the recessed portion or the through-hole is filled with the pressure-sensitive adhesive layer. Accordingly, the optical film can be arranged on the viewer side of the camera without inhibition of the arrival of light at the camera. Further, in the present invention, there can be obtained the following optical film: while the optical film includes the polarizing plate that has the recessed portion or the through-hole, and hence has insufficient rigidity by itself, the optical film includes the glass film, and hence the occurrence of the tearing of the polarizing plate or the like is prevented, and the optical film is excellent in handleability; the strain of the polarizing plate is suppressed; and a dimensional change of the optical film due to an environmental change (e.g., a temperature change) is small, and a local deformation thereof hardly occurs. Such optical film can be subjected to a roll-to-roll process, and is prevented from causing an inconvenience, and is hence excellent in production efficiency. In addition, the use of the optical film can provide, for example, an image display apparatus with a camera excellent in imaging quality.

In one embodiment, the glass film 10 and the polarizing plate 20 are laminated via an adhesive layer 40.

The optical film may further include any appropriate other layer. For example, the optical film may further include: an optically functional layer, such as a retardation layer, an antireflection layer, an antiglare layer, or a brightness enhancement film; an antifouling layer; or a hard coat layer. When any other layer (e.g., a retardation layer) is arranged between the polarizing plate and the pressure-sensitive adhesive layer, the recessed portion or the through-hole is preferably formed in a laminate portion of the other layer and the polarizing plate, and the pressure-sensitive adhesive layer preferably fills the recessed portion or the through-hole.

In one embodiment, the optical film may be provided in an elongated shape.

### B. Glass Film

Any appropriate glass film may be adopted as the glass film. According to classification based on composition, examples of the glass film include soda-lime glass, borate glass, aluminosilicate glass, and quartz glass films. In addition, according to classification based on an alkali component, examples of the glass film include alkali-free glass and low-alkali glass films. The content of an alkali metal component (e.g., Na₂O, K₂O, Li₂O) in the glass is preferably 15 wt% or less, more preferably 10 wt% or less.

The thickness of the glass film is from 30 µm to 150 µm, more preferably from 50 µm to 140 µm, still more preferably from 70 µm to 130 µm, particularly preferably from 80 µm to 120 µm. When the thickness falls within such ranges, there can be obtained the following optical film: the occurrence of the tearing of the polarizing plate or the like is prevented, and hence the optical film is excellent in handleability; the strain of the polarizing plate is suppressed; and a dimensional change of the optical film due to an environmental change (e.g., a temperature change) is small, and a local deformation thereof hardly occurs. In addition, there can be obtained an optical film, which is excellent in flexibility, can be processed by a roll-to-roll process, and hardly causes the breakage of its glass film, and is hence excellent in productivity.

The glass film preferably has a light transmittance at a wavelength of 550 nm of 85% or more. The glass film preferably has a refractive index at a wavelength of 550 nm of from 1.4 to 1.65.

The glass film has a density of preferably from 2.3 g/cm³ to 3.0 g/cm³, more preferably from 2.3 g/cm³ to 2.7 g/cm³. When the density falls within such ranges, there can be obtained an optical film, which is suppressed from causing the strain of its polarizing plate and shows a small dimensional change. The use of a glass film whose density falls within the ranges can provide an optical film that can contribute to the weight reduction of an image display apparatus.

Any appropriate method may be adopted as a forming method for the glass film. The glass film is typically produced by melting a mixture containing a main raw material, such as silica or alumina, a fining agent, such as salt cake or antimony oxide, and a reducing agent, such as carbon, at a temperature of from 1, 400°C to 1, 600°C, and forming the molten mixture into a thin sheet shape, followed by cooling. Examples of the forming method for the glass film include a slot down-draw method, a fusion method, and a float method. The glass film formed in a sheet shape by any one of those methods may be chemically polished with a solvent, such as hydrofluoric acid, as required, in order to reduce its thickness or enhance its smoothness.

### C. Polarizing Plate

The polarizing plate includes a polarizer. As illustrated in each of FIG. **1(b)** and FIG. **2(b)****,** the polarizing plate **20** typically further includes a protective film **24a** or **24b** arranged on at least one side of a polarizer **23**.

As described above, the polarizing plate has the recessed portion or the through-hole.

The recessed portion is preferably formed so as to penetrate the polarizer. The thickness (thickness **T** in FIG. **1(b)**) of the recessed portion with respect to the upper surface (surface on the glass film side) of the polarizer is preferably 0.1 µm or more, more preferably 0.5 µm or more, still more preferably 1 µm or more. In addition, the thickness (thickness **T** in FIG. **1(b)**) of the recessed portion with respect to the upper surface (surface on the glass film side) of the polarizer is preferably from 1% to 99%, more preferably from 5% to 95% of a thickness (thickness **X** in FIG. **1(b)**) from the upper surface (surface on the glass film side) of the polarizer to the upper surface of the polarizing plate. When the thickness T falls within the ranges, an optical film that hardly inhibits the arrival of light at a camera can be obtained.

The recessed portion may be formed into any appropriate shape. Examples of the sectional-view shape of the recessed portion include a rectangular shape, a trapezoidal shape, and a triangular shape. Examples of the plan-view shape of the recessed portion viewed from an opening portion side (lower side of the polarizing plate) include a circular shape, an elliptical shape, a square shape, a rectangular shape, and a polygonal shape. Examples of the plan-view shape of the recessed portion viewed from a side opposite to the opening portion (upper side of the polarizing plate) include a circular shape, an elliptical shape, a square shape, a rectangular shape, and a polygonal shape. The through-hole may be, for example, a prism shape or a cylindrical shape. In addition, the through-hole may be a columnar shape having a taper.

The plan-view area of each of the recessed portion and the through-hole may be set to an appropriate area in accordance with the size of the camera of an image display apparatus to which the optical film is applied. The plan-view area of each of the recessed portion and the through-hole on the upper surface (surface on the glass film side) of the polarizer is preferably from 0.3×10⁻⁶ m² to 20×10⁻⁴ m², more preferably from 0.7×10⁻⁶ m² to 10×10⁻⁴ m², still more preferably from 0.7×10⁻⁶ m² to 3×10⁻⁴ m².

The recessed portion and the through-hole may each be formed by any appropriate method. A typical example of a method of forming each of the recessed portion and the through-hole is a method including applying laser light to the polarizing plate. Any appropriate laser may be adopted as the laser as long as the recessed portion or the through-hole can be formed in the polarizing plate. A laser that can emit light having a wavelength in the range of from 150 nm to 11 µm is preferably used. Specific examples thereof include: a gas laser, such as a CO₂ laser; a solid laser, such as an YAG laser; and a semiconductor laser. Of those, a CO₂ laser is preferably used.

Conditions for the application of the laser light may be set to any appropriate conditions in accordance with, for example, the laser to be used. When the CO₂ laser is used, an output condition is preferably from 10 W to 1,000 W, more preferably from 100 W to 400 W.

The thickness of the polarizing plate (thickness of a site where the recessed portion or the through-hole is not formed) is preferably from 5 µm to 300 µm, more preferably from 10 µm to 250 µm, still more preferably from 25 µm to 200 µm, particularly preferably from 25 µm to 100 µm.

### C-1. Polarizer

The thickness of the polarizer is not particularly limited, and an appropriate thickness may be adopted depending on purposes. The thickness is typically from about 1 µm to about 80 µm. In one embodiment, a thin polarizer is used, and the thickness of the polarizer is preferably 20 µm or less, more preferably 15 µm or less, still more preferably 10 µm or less, particularly preferably 6 µm or less.

The polarizer preferably exhibits absorption dichroism at any wavelength in the wavelength range of from 380 nm to 780 nm. The polarizer has a single layer transmittance of preferably 40.0% or more, more preferably 41.0% or more, still more preferably 42.0% or more, particularly preferably 43.0% or more. The polarizer has a polarization degree of preferably 99.8% or more, more preferably 99.9% or more, still more preferably 99.95% or more.

The polarizer is preferably an iodine-based polarizer. More specifically, the polarizer may be formed of an iodine-containing polyvinyl alcohol-based resin (hereinafter referred to as "PVA-based resin") film.

Any appropriate resin may be adopted as a PVA-based resin for forming the PVA-based resin film. Examples of the resin include polyvinyl alcohol and an ethylene-vinyl alcohol copolymer. The polyvinyl alcohol is obtained by saponifying polyvinyl acetate. The ethylene-vinyl alcohol copolymer is obtained by saponifying an ethylene-vinyl acetate copolymer. The saponification degree of the PVA-based resin is typically from 85 mol% to 100 mol%, preferably from 95.0 mol% to 99.95 mol%, more preferably from 99.0 mol% to 99.93 mol%. The saponification degree may be determined in conformity with JIS K 6726-1994. The use of the PVA-based resin having such saponification degree can provide a polarizer excellent in durability. When the saponification degree is excessively high, gelling may occur.

The average polymerization degree of the PVA-based resin may be appropriately selected depending on purposes. The average polymerization degree is typically from 1,000 to 10,000, preferably from 1,200 to 5,000, more preferably from 1,500 to 4,500. The average polymerization degree may be determined in conformity with JIS K 6726-1994.

A production method for the polarizer is, for example, a method (I) including stretching and dyeing a PVA-based resin film alone, or a method (II) including stretching and dyeing a laminate (i) having a resin substrate and a polyvinyl alcohol-based resin layer. Detailed description of the method (I) is omitted because the method is well known and commonly used in the art. The production method (II) preferably includes the step of stretching and dyeing the laminate (i) having the resin substrate and the polyvinyl alcohol-based resin layer formed on one side of the resin substrate to produce a polarizer on the resin substrate. The laminate (i) may be formed by applying an application liquid containing a polyvinyl alcohol-based resin onto the resin substrate and drying the applied liquid. In addition, the laminate (i) may be formed by transferring a polyvinyl alcohol-based resin film onto the resin substrate. For example, details about the production method (II) are described in JP 2012-73580 A, which is incorporated herein by reference.

### C-2. Protective Film

Any appropriate resin film may be adopted as the protective film. As a material for forming the protective film, there are given, for example: a polyester-based resin, such as polyethylene terephthalate (PET); a cellulose-based resin, such as triacetylcellulose (TAC); a cycloolefin-based resin, such as a norbornene-based resin; an olefin-based resin, such as polyethylene or polypropylene; and a (meth)acrylic resin. Of those, polyethylene terephthalate (PET) is preferred. The term "(meth)acrylic resin" refers to an acrylic resin and/or a methacrylic resin.

In one embodiment, a (meth)acrylic resin having a glutarimide structure is used as the (meth)acrylic resin. The (meth)acrylic resin having a glutarimide structure (hereinafter sometimes referred to as glutarimide resin) is described in, for example, JP 2006-309033 A, JP 2006-317560 A, JP 2006-328329 A, 2006-328334 A, JP 2006-337491 A, JP 2006-337492 A, JP 2006-337493 A, JP 2006-337569 A, JP 2007-009182 A, JP 2009-161744 A, and JP 2010-284840 A, the descriptions of which are incorporated herein by reference.

The protective film and the polarizer are laminated via any appropriate adhesive. The resin substrate used at the time of the production of the polarizer may be peeled before the lamination of the protective film and the polarizer, or after the lamination. The recessed portion and the through-hole may each be formed by the above-mentioned method after the polarizer and the protective film have been laminated to form the polarizing plate.

The thickness of the protective film is preferably from 4 µm to 250 µm, more preferably from 5 µm to 150 µm, still more preferably from 10 µm to 100 µm, particularly preferably from 10 µm to 500 µm.

### D. Pressure-sensitive Adhesive Layer

The pressure-sensitive adhesive layer is formed of any appropriate optically transparent pressure-sensitive adhesive. A pressure-sensitive adhesive containing, for example, an acrylic polymer, a silicone-based polymer, polyester, polyurethane, polyamide, polyether, or a fluorine-based or rubber-based polymer as a base polymer is used as the pressure-sensitive adhesive. Of those, an acrylic pressure-sensitive adhesive is preferably used. This is because the acrylic pressure-sensitive adhesive is excellent in optical transparency, shows moderate wettability, moderate cohesiveness, and a moderate pressure-sensitive adhesive characteristic, such as an adhesive property, and may be excellent in, for example, weatherability and heat resistance. An acrylic pressure-sensitive adhesive formed of an acrylic polymer having 4 to 12 carbon atoms is particularly preferred.

As illustrated in each of FIG. **1(b)** and FIG. **2(b)**, the pressure-sensitive adhesive layer includes: a bonding region **31** formed so as to be bonded to an adherend (e.g., a liquid crystal cell); and a filling region **32** formed so as to fill the recessed portion **21** or thorough-hole **22** of the polarizing plate **20** (or a laminated portion formed of the polarizing plate and any other layer). The thickness (thickness **Y** in FIG. **1(b)**) of the bonding region **31** is preferably from 1 µm to 100 µm, more preferably from 3 µm to 80 µm, still more preferably from 3 µm to 50 µm. When the thickness falls within such ranges, an optical film excellent in flexibility can be obtained.

Eighty volume percent or more of the recessed portion or through-hole of the polarizing plate (or the laminated portion formed of the polarizing plate and the other layer) is preferably filled with the pressure-sensitive adhesive layer, 90 vol% or more thereof is more preferably filled with the pressure-sensitive adhesive layer, 99 vol% or more thereof is particularly preferably filled with the pressure-sensitive adhesive layer, and 100 vol% thereof is more particularly preferably filled with the pressure-sensitive adhesive layer. When the entirety of the recessed portion or the through-hole is filled with the pressure-sensitive adhesive layer, an air layer is eliminated, and hence unnecessary interfacial reflection can be prevented.

Any appropriate method may be adopted as a method of forming the pressure-sensitive adhesive layer. Specifically, for example, there is adopted a method including applying the above-mentioned pressure-sensitive adhesive to the polarizing plate (polarizing plate having arranged therein the recessed portion or the through-hole) so that a desired shape may be obtained, and drying the pressure-sensitive adhesive, or a method including separately forming a pressure-sensitive adhesive layer having a desired shape on a substrate (e.g., a separator) and bonding the resultant to the polarizing plate (polarizing plate having arranged therein the recessed portion or the through-hole) . Examples of a method of applying the pressure-sensitive adhesive include: a roll coating method, such as reverse coating or gravure coating; a spin coating method; a screen coating method; a fountain coating method; a dipping method; and a spraying method.

### E. Adhesive Layer

The adhesive layer is formed of any appropriate optically transparent adhesive. Examples of the adhesive include a polyester-based adhesive, a polyurethane-based adhesive, a polyvinyl alcohol-based adhesive, and an epoxy-based adhesive. Of those, an epoxy-based adhesive is preferred. This is because particularly satisfactory adhesiveness can be obtained.

When the adhesive is a thermosetting adhesive, the adhesive can exhibit a peel-resisting force by being cured (solidified) through heating. In addition, when the adhesive is a photocurable adhesive, such as a UV-curable adhesive, the adhesive can exhibit a peel-resisting force by being cured through irradiation with light, such as UV light. In addition, when the adhesive is a moisture-curable adhesive, the adhesive may react with, for example, moisture in air to cure. Accordingly, the adhesive can cure to exhibit a peel-resisting force even by being left to stand.

For example, a commercial adhesive may be used as the adhesive, or the adhesive may be prepared as an adhesive solution (or dispersion liquid) by dissolving or dispersing various curable resins in a solvent.

The thickness of the adhesive layer is preferably 10 µm or less, more preferably from 1 µm to 10 µm, still more preferably from 1 µm to 8 µm, particularly preferably from 1 µm to 6 µm. When the thickness falls within such ranges, a suppressing effect on the strain and dimensional change of the polarizing plate by the arrangement of the glass film can be significantly exhibited.

The modulus of elasticity of the adhesive layer is preferably from 1 GPa to 10 GPa, more preferably from 1 GPa to 5 GPa, still more preferably from 1.5 GPa to 3 GPa. When the modulus of elasticity falls within such ranges, a suppressing effect on the strain and dimensional change of the polarizing plate by the arrangement of the glass film can be significantly exhibited. In addition, an optical film excellent in flexibility can be obtained. Herein, the modulus of elasticity may be measured with an autograph under the following conditions.

### <Method of measuring Modulus of Elasticity>

| | |
|---|---|
| Measurement temperature: | 23°C |
| Sample size: | 2 cm wide by 15 cm long |
| Chuck-to-chuck distance: | 10 cm |
| Tensile rate: | 10 mm/min |

### Reference Signs List

- 10: glass film

- 20: polarizing plate
- 30: pressure-sensitive adhesive layer
- 40: adhesive layer
- 100, 100': optical film

## Claims

1. An optical film, comprising a glass film, a polarizing plate, and a pressure-sensitive adhesive layer in the stated order,
wherein the polarizing plate has a recessed portion that opens on a surface of the polarizing plate opposite to the glass film, or a through-hole,
wherein part of the pressure-sensitive adhesive layer fills the recessed portion or the through-hole, and
wherein the glass film has a thickness of from 30 µm to 150 µm.

2. The optical film according to claim 1, further comprising an adhesive layer arranged between the glass film and the polarizing plate.

3. The optical film according to claim 2, wherein the adhesive layer has a thickness of 10 µm or less.

4. The optical film according to any one of claims 1 to 3,
wherein the polarizing plate includes a polarizer, and
wherein the recessed portion or the through-hole has a plan-view area of from 0.3×10⁻⁶ m² to 20×10⁻⁴ m² on a surface on a glass film side of the polarizer.
